(19) Europäisches Patentamt / European Patent Office / Office européen des brevets

(11) **EP 3 173 760 A1**

(12) **EUROPÄISCHE PATENTANMELDUNG**

(43) Veröffentlichungstag:
**31.05.2017 Patentblatt 2017/22**

(51) Int Cl.:
*G01L 9/00* (2006.01)  *G01L 9/12* (2006.01)

(21) Anmeldenummer: **15196952.4**

(22) Anmeldetag: **30.11.2015**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA MD**

(71) Anmelder: **VEGA Grieshaber KG**
**77709 Wolfach (DE)**

(72) Erfinder:
• **Weller, Bernhard**
**77709 Wolfach (DE)**

• **Seiffe, Johannes**
**77736 Zell a. H. (DE)**

(74) Vertreter: **Westphal, Mussgnug & Partner Patentanwälte mbB**
**Am Riettor 5**
**78048 Villingen-Schwenningen (DE)**

Bemerkungen:
Geänderte Patentansprüche gemäss Regel 137(2) EPÜ.

(54) **RELATIVDRUCKSENSOR**

(57) Verfahren zur Ermittlung eines Ausgabewertes (A), der einem Druck (P) oder einem zu dem Druck (P) proportionalen Wert entspricht, mit einem Relativdrucksensor mit wenigstens einer zwischen einem Grundkörper (3) und einer Messmembran (5) ausgebildeten Messkapazitäten ($C_M$) und wenigstens einer zwischen dem Grundkörper (3) und der Messmembran (5) ausgebildeten Referenzkapazität ($C_R$), wobei eine Ermittlung des Ausgabewertes (A) wenigstens folgende Schritte aufweist

- Bestimmen der Messkapazität ($C_M$)
- Bestimmen der Referenzkapazität ($C_R$)
- Vergleichen eines Werts einer ersten Funktion $F_Z(C_R)$ der Referenzkapazität ($C_R$) mit der Messkapazität ($C_M$) und
-Ausgeben von
$A = F_Q(C_M, C_R)$ für $C_M = F_Z(C_R)$
$A = F_{CR}(C_R)$ für $C_M > F_Z(C_R)$
$A = F_{CM}(C_M)$ für $C_M < F_Z(C_R)$
als Ausgabewert.

Fig. 2

EP 3 173 760 A1

**Beschreibung**

Die Erfindung betrifft ein Verfahren zur Relativdruckmessung mit einer kapazitiven Druckmesszelle, sowie eine Relativdruckmesszelle.

Aus dem Stand der Technik sind verschiedene Relativdrucksensoren bekannt. Ein Relativdrucksensor dient zur Messung des Differenzdruckes zwischen dem Druck in einem Messmedium und dem aktuellen Atmosphärendruck. Ein solcher Relativdrucksensor ist aus einem Grundkörper aufgebaut, der zusammen mit einer randseitig mit demselben verbundenen Messmembran eine Sensorkammer bzw. Druckkammer ausbildet. Zur Relativdruckmessung wird die Referenzluft über eine grundkörperseitige Belüftungsöffnung in die Sensorkammer geleitet, dabei wird die der Sensorkammer abgewandte Oberfläche der Messmembran mit dem Messdruck beaufschlagt. Die hierdurch bewirkte Verformung der Messmembran ist ein Maß für den Relativdruck, welches in ein Messsignal umgesetzt wird.

Keramisch-kapazitive Druckmesszellen werden aus einem Grundkörper-Sinterkörper und einem Membran-Sinterkörper randseitig mittels eines Abstandshalters miteinander verlötet oder hartverlötet, so dass eine Sensorkammer entsteht. Das verwendete Lot oder das Aktivhartlot, bspw. Glasfritte dient dabei selbst als Abstandshalter.

Vor dem Fügen von Grundkörper und Membrankörper werden auf deren Oberflächen, die die Kammerwände der Sensorkammer bilden, Grundkörperelektroden und eine Membranelektrode aufgebracht, üblicherweise durch Aufsputtern von Tantal oder einen Dickschicht-Siebdruck von Gold.

Durch die Zufuhr der Referenzluft über die Belüftungsöffnung gelangt Feuchte in die Sensorkammer, die bei Unterschreitung des Taupunkts dort kondensiert und damit die Funktion beeinträchtigen kann. Durch die Anlagerung von Wasser wird die Dielektrizitätskonstante der wirksamen Elektrodenflächen beeinflusst, wodurch der Messwert verfälscht wird.

Um die Toleranz gegenüber Feuchtigkeit zu verbessern, wird gemäß der EP 1 061 351 A1 vorgeschlagen, die inneren Oberflächen der Sensorkammer einer solchen Druckmesszelle ganzflächig mit einem hydrophoben Material zu beschichten, wobei bevorzugt Silane verwendet werden. Da solche Beschichtungen aus Silanen oder Silanverbindungen organisch sind, ist deren Temperatureinsatzbereich begrenzt. Ein weiterer Nachteil besteht darin, dass solche Beschichtungen aufgrund der Temperaturbeschränkungen erst nach der Fügung von Membran und Grundkörper mittels Vakuum durch die Belüftungsöffnung im Grundkörper erzeugt werden können, d. h. ein hoher fertigungstechnischer Aufwand hierzu erforderlich ist.

Ferner ist aus der EP 2 463 635 A1 eine Druckmesszelle bekannt, bei der eine vereinfachte Herstellung dadurch erreicht wird, dass eine hydrophobe Glasbeschichtung vor dem Fügen von Membran und Grundkörper ganzflächig auf die mit Elektroden versehenen Flächen von Grundkörper und Membran aufgebracht wird.

Da es mit den vorstehend beschriebenen konstruktiven Ansätzen nicht vollständig gelingt, eine Kondensation innerhalb der Messkammer zu verhindern, treten weiterhin Kondensat bedingte Fehlmessungen auf. Hier setzt die vorliegende Erfindung an. Diese Aufgabe wird durch ein Verfahren zur Ermittlung eines Ausgabewertes gemäß Patentanspruch 1 sowie einen Relativdrucksensor gemäß Patentanspruch 4 gelöst. Vorteilhafte Weiterbildungen sind Gegenstand abhängiger Ansprüche.

Ein erfindungsgemäßes Verfahren zur Ermittlung eines Ausgabewertes, der einem Druck oder einem zu dem Druck proportionalen Wert entspricht mit einem Relativdrucksensor mit wenigstens einer zwischen einem Grundkörper und einer Messmembran ausgebildeten Messkapazität weist wenigstens folgende Schritte auf:

Bestimmen des Wertes einer Messkapazität, Bestimmen des Wertes einer Referenzkapazität, Vergleichen eines Werts einer vorgegebenen ersten Funktion der Referenzkapazität mit dem Wert der Messkapazität und Ausgeben des Werts einer zweiten Funktion in Abhängigkeit der Messkapazität und der Referenzkapazität, falls der Wert der Messkapazität dem Wert der ersten Funktion in Abhängigkeit von der Referenzkapazität entspricht, des Werts einer dritten Funktion in Abhängigkeit von der Referenzkapazität, falls der Wert der Messkapazität größer als der Wert der ersten Funktion ist und Ausgeben des Werts einer vierten Funktion in Abhängigkeit von der Messkapazität, falls der Wert der Messkapazität kleiner als der Wert der ersten Funktion ist, als Ausgabewert.

Der Erfindung liegt dabei die Erkenntnis zu Grunde, dass trotz einer beispielsweise hydrophoben Ausstattung der einander zugewandten Oberflächen von Messmembran und Grundkörper eine Kondensation von Feuchtigkeit im Inneren des Sensors nicht vollständig verhindert werden kann, sich eine solche Kondensation aber in der Regel zunächst nur auf einen der innerhalb der Druckmesszelle ausgebildeten Kondensatoren auswirkt. Mit der weiteren Erkenntnis, dass in einem Normalzustand ohne Kondensation ein Wert der Messkapazität als Funktion der Referenzkapazität darstellbar ist, was daraus resultiert, dass druckinduzierte Änderungen sich stets auf alle druckveränderlichen Kapazitätswerte auswirken, kann so bestimmt werden, welche der Kapazitäten von einer kondensatbedingten Permittivitätsänderung betroffen ist und ein Ausgabewert auf Basis der nicht betroffenen bzw. verfälschten Kapazität ausgegeben werden. Auf diese Weise wird zwar ein Verlust an Genauigkeit bei der Bestimmung des Ausgabewertes in Kauf genommen, dies stellt aber dennoch eine Verbesserung gegenüber einem auf Grund der Kondensation verfälschten Ausgabewert dar.

In einer Weiterbildung des erfindungsgemäßen Verfahrens kann der Ausgabewert zusätzlich temperatur- und/oder feuchtigkeitskompensiert sein. Durch die Bestimmung einer Temperatur- und/oder einer Luftfeuchtigkeit im Inneren des Sensors können temperaturinduzierte Kapazitätsänderungen sowie Änderungen der Kapazität auf Grund einer durch die erhöhte Luftfeuchtigkeit geänderten Permittivität bestimmt und bei der Berechnung des Ausgabewerts berücksichtigt werden.

Zusätzlich oder alternativ kann die erste Funktion Abweichungen von beispielsweise +/- 1% berücksichtigen, sodass ein Übergehen auf eine Berechnung des Ausgabewertes in Abhängigkeit von nur der Referenzkapazität oder nur der Messkapazität erst dann erfolgt, wenn tatsächlich eine deutliche Beeinträchtigung einer der Kapazitäten auf Grund einer Tropfenbildung festgestellt wird.

Ein Relativdrucksensor gemäß der vorliegenden Anmeldung weist wenigstens eine zwischen einem Grundkörper und einer Messmembran ausgebildete Messkapazität und wenigstens eine zwischen dem Grundkörper und der Messmembran ausgebildete Referenzkapazität auf, wobei der Drucksensor eine Sensorelektronik mit einem Speicher und einer Vergleichseinheit aufweist, wobei in dem Speicher wenigstens eine erste Funktion der Messkapazität in Abhängigkeit von der Referenzkapazität, eine zweite Funktion zur Bestimmung eines Ausgabewertes in Abhängigkeit von der Messkapazität und der Referenzkapazität, eine dritte Funktion zur Bestimmung des Ausgabewertes in Abhängigkeit von der Referenzkapazität sowie eine vierte Funktion zur Bestimmung des Ausgabewertes in Abhängigkeit von der Messkapazität hinterlegt ist und der Vergleichseinheit die Messkapazität und ein Wert der ersten Funktion zugeführt ist, und abhängig von dem Vergleich der Wert der zweiten Funktion für den Fall, dass der Wert der Messkapazität dem Wert der ersten Funktion entspricht, der Wert der dritten Funktion für den Fall, dass der Wert der Messkapazität größer als der Wert der ersten Funktion ist und der Wert der vierten Funktion für den Fall, dass der Wert der Messkapazität kleiner als der Wert der ersten Funktion ist, als Ausgabewert ausgegeben wird.

Durch eine entsprechende Ausgestaltung des Sensors wird erreicht, dass im Normalfall, d. h. für den Fall, dass keine Beeinträchtigung durch eine Kondensation von Feuchtigkeit im Inneren des Sensors vorliegt, als Ausgabewert der Wert einer Funktion in Abhängigkeit von der Messkapazität und der Referenzkapazität ausgegeben wird. In diesem Fall können durch eine entsprechende Berechnung des Ausgabewertes Störeinflüsse, die sich auf beide Kapazitäten, d. h. sowohl auf die Messkapazität als auch auf die Referenzkapazität auswirken, kompensiert werden. Für den Fall, dass eine der beiden Kapazitäten durch Kondensation beeinträchtigt ist, kann dies durch einen Vergleich des Wertes der Messkapazität mit dem Wert der ersten Funktion festgestellt und dann eine Berechnung des Ausgabewertes auf die nicht betroffene Kapazität umgestellt werden.

Zur Kompensation von temperatur- und/oder feuchtigkeitsinduzierten, d. h. luftfeuchtigkeitsinduzierten, Abweichungen kann an oder in dem Drucksensor, vorzugsweise in einer zwischen dem Grundkörper und der Messmembran ausgebildeten Messkammer ein Temperatur- und/oder ein Feuchtigkeitssensor angeordnet sein. Durch eine derartige Ausgestaltung wird erreicht, dass Temperatur- und/oder Luftfeuchtigkeitswerte im Inneren der Messzelle erfasst und bei der Berechnung des Ausgabewertes berücksichtigt werden können.

Dadurch, dass der Sensor noch weitere Mess- und/oder Referenzkapazitäten aufweist, die für die Auswertung herangezogen werden, können in den Speicher zusätzliche Funktionen zur Messwertermittlung und Messwertkompensation sowie zur gegenseitigen Überwachung der Kapazitäten auf eine kondensationsbedingte Abweisung hinterlegt sein.

Weist die Messzelle beispielsweise eine Messkapazität und zwei Referenzkapazitäten auf, können in dem Speicher vorteilhafterweise sieben Funktionen hinterlegt sein. Folgende Funktionen sind dies:

Funktion zur Berechnung des Ausgabewertes abhängig von der Messkapazität, der ersten Referenzkapazität und der zweiten Referenzkapazität

Funktion zur Berechnung des Ausgabewertes abhängig von der Mess- und der ersten Referenzkapazität

Funktion zur Berechnung des Ausgabewertes abhängig von der Mess- und der zweiten Referenzkapazität

Funktion zur Berechnung des Ausgabewertes abhängig von der ersten Referenzkapazität und der zweiten Referenzkapazität

Funktion zur Berechnung des Ausgabewertes abhängig von der Messkapazität

Funktion zur Berechnung des Ausgabewertes abhängig von der ersten Referenzkapazität

Funktion zur Berechnung des Ausgabewertes abhängig von der zweiten Referenzkapazität

wobei abhängig davon, welche der Kapazitäten von der Kondensation betroffen sind, die geeignete Funktion zur Bestimmung des Ausgabewertes ausgewählt wird. Die Entscheidung, dass eine oder mehrere Kapazitäten von Kondensation betroffen sind, kann entsprechend durch in dem Speicher hinterlegte Funktionen zur Überprüfung erfolgen.

Auf diese Weise kann eine weitere Messwertverbesserung erreicht werden.

Vorteilhafte Weiterbildungen sind Gegenstand abhängiger Ansprüche.

Die vorliegende Erfindung wird nachfolgend anhand eines Ausführungsbeispiels unter Bezugnahme auf die beigefügten Figuren eingehend erläutert.

Es zeigen:

Fig. 1    eine Prinzipskizze eines Drucksensors 1 gemäß der vorliegenden Anmeldung, und

Fig. 2    einen Vergleich der zweiten Funktion und der dritten Funktion bei dauerhaft einwirkender Feuchtigkeit.

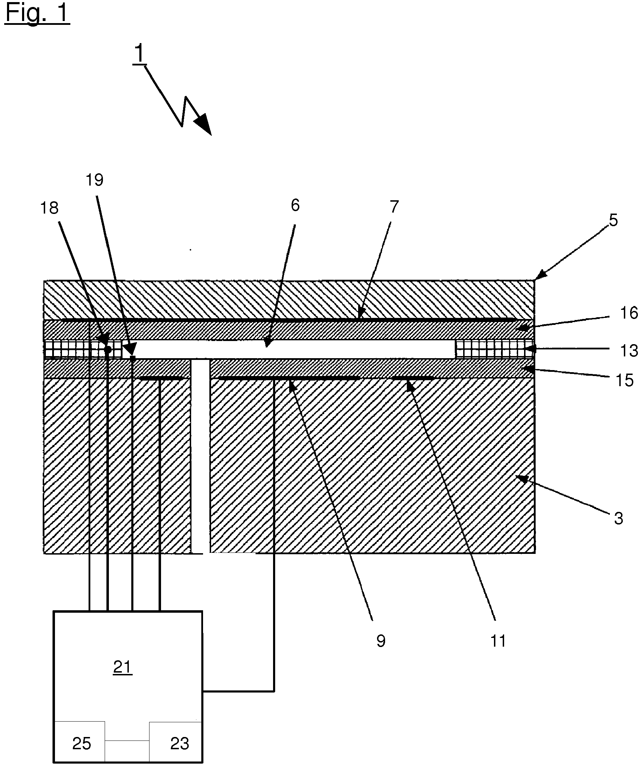

Figur 1 zeigt eine Prinzipskizze eines Drucksensors 1 gemäß der vorliegenden Anmeldung.

In Figur 1 ist der Drucksensor 1 in einem Längsschnitt dargestellt, wobei der Drucksensor 1 im Wesentlichen aus einem Grundkörper 3 sowie einer über einen Abstandshalter 13 an dem Grundkörper 3 angeordneten Messmembran 5 aufgebaut ist.

An den zueinander weisenden Oberflächen des Grundkörpers 3 und der Messmembran 5 sind Elektroden zur Ausbildung einer Messkapazität $C_M$ sowie einer Referenzkapazität $C_R$ ausgebildet. In dem in Figur 1 dargestellten Ausführungsbeispiel ist hierfür an der Messmembran 5 eine Membranelektrode 7, die eine dem Grundkörper 3 zugewandte Oberfläche der Messmembran 5 im Wesentlichen vollflächig bedeckt, sowie an dem Grundkörper 3 eine zentral angeordnete und kreisförmig ausgebildete Messelektrode 9 sowie eine die Messelektrode 9 ringförmig umgebende Referenzelektrode 11 ausgebildet. Die mit der Messelektrode 9 und der Referenzelektrode 11 versehene Oberfläche des Grundkörpers 3 ist im vorliegenden Ausführungsbeispiel mit einer ersten hydrophoben Schicht 15 und die mit der Membranelektrode 7 versehene Oberfläche der Messmembran 5 mit einer zweiten hydrophoben Schicht 16 bedeckt. Wie im vorliegenden Ausführungsbeispiel dargestellt, sind die hydrophoben Schichten 15, 16 jeweils vollflächig auf die mit den Elektroden 7, 9, 11 versehenen Oberflächen von Grundkörper 3 und Messmembran 5 aufgebracht, was insbesondere bei der Herstellung der vorliegenden Messzelle 1 vorteilhaft ist.

Sowohl die Membranelektrode 7 als auch die Messelektrode 9 und die Referenzelektrode 11 sind mittels durch den Grundkörper 3 durchkontaktierten Leitungen mit einer Sensorelektronik 21 verbunden. Der Sensorelektronik 21 ist im vorliegenden Ausführungsbeispiel außerdem das Signal eines Temperatursensors 18, der im vorliegenden Ausführungsbeispiel in dem Abstandshalter 13 angeordnet ist sowie das Messsignal eines Feuchtigkeitssensors 19, der im vorliegenden Ausführungsbeispiel in einer zwischen der Messmembran 5 und dem Grundkörper 3 ausgebildeten Messkammer 6 angeordnet ist, zugeführt. In der Sensorelektronik 21 ist sowohl ein Speicher 23 als auch eine Vergleichseinheit 25 angeordnet, wobei in dem Speicher 23 wenigstens eine erste Funktion $F_Z$ zur Berechnung der Messkapazität $C_M$ in Abhängigkeit von der Referenzkapazität $C_R$ gespeichert ist. In dem Speicher 23 ist ferner eine zweite Funktion $F_Q$ zur Berechnung des Ausgabewerts A auf Basis der Messkapazität $C_M$ und der Referenzkapazität $C_R$, eine dritte Funktion $F_{CR}$ zur Berechnung des Ausgabewerts A auf Basis der Referenzkapazität $C_R$ und eine vierte Funktion $F_{CM}$ zur Berechnung des Ausgabewerts A auf Basis der Messkapazität $C_M$ hinterlegt. Sämtliche Funktionen können sowohl in geschlossener Form als auch in Form von Wertetabellen in dem Speicher 23 hinterlegt sein.

Der Vergleichseinheit 25 ist sowohl der Wert der Messkapazität $C_M$ als auch der mittels der ersten Funktion $F_Z$ errechnete Wert der Messkapazität zugeführt. Abhängig von einem Vergleich dieser beiden Werte werden im vorliegenden Ausführungsbeispiel unterschiedliche Kapazitäten $C_M$, $C_R$ zur Berechnung des Ausgabewertes A herangezogen.

Es hat sich nämlich gezeigt, dass in vielen Fällen durch Kondensation von Feuchtigkeit in der Messkammer 6 zunächst nur eine der Kapazitäten $C_M$, $C_R$ betroffen ist und dass dieser Zustand häufig auch bei hoher Feuchteeinwirkung über einen langen Zeitraum anhält. Dies ist auf die, durch die hydrophoben Oberflächen der Schichten 15, 16 verursachte tropfenförmige Kondensation und auf eine Temperaturverteilung über die Messzelle 1 lokal einsetzende Kondensation zurückzuführen. Sobald erste Tropfen innerhalb einer der mindestens zwei druckabhängigen Kapazitäten $C_M$, $C_R$

in der Messkammer 6 kondensieren, steigt auf Grund der hohen Permittivität des flüssigen Wassers diese Kapazität stark an. Da sich im Falle einer druckbedingten Kapazitätsänderung stets alle druckabhängigen Kapazitätswerte verändern und dabei einem durch die Geometrie vorgegebenen Zusammenhang folgen, kann eine durch Kondensation bedingte Kapazitätsänderung als solche erfasst werden und in der Sensorelektronik ein Algorithmus zur Anpassung der Messwerterechnung aktiviert werden. Diese Berechnungen des Ausgabewertes A bzw. des Druckwertes kann in diesem Fall auf eine Kennlinie umgestellt werden, die nur auf der oder den nicht durch Kondensation beeinflussten Kapazitäten beruht. Je nach Anordnung und Anzahl der in der Druckmesszelle 1 verwendeten Kapazitäten hat dies zwar eine Verschlechterung der Messgenauigkeit gegenüber der Verwendung aller Kapazitäten in trockenem Zustand zur Folge, gegenüber der Messung unter Verwendung der durch Kondensation beeinflussten Kapazitäten ist der Gewinn an Messgenauigkeit jedoch sehr groß. Für viele Anwendungen kann durch die beschriebene Vorgehensweise eine ausreichende Funktionsfähigkeit des Drucksensors 1 erhalten werden bis durch wechselnde Umweltbedingungen der Sensor 1 wieder trocknet und damit die Verwendung sämtlicher Kapazitäten zur Berechnung des Ausgabewertes A möglich ist.

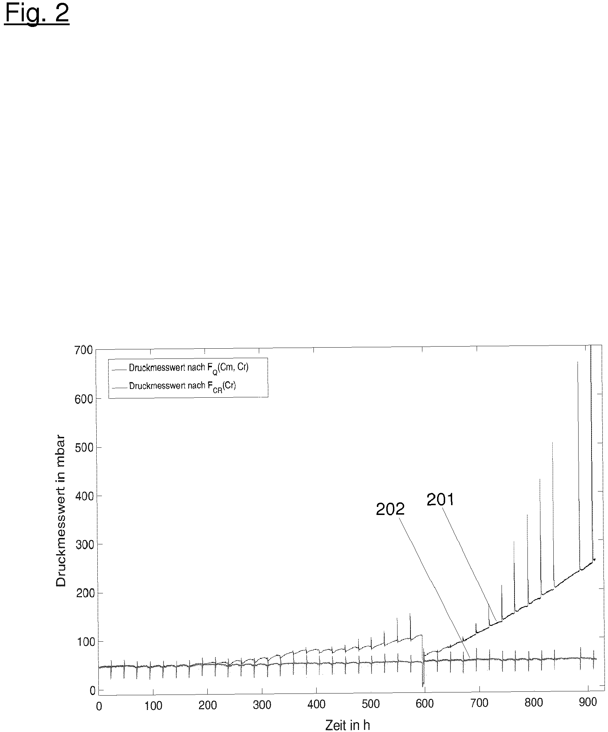

Figur 2 zeigt den zeitlichen Verlauf zweier Kennlinien, wobei der vorliegend getestete keramisch kapazitive Relativdrucksensor prozessseitig, d. h. von Seiten der Messmembran 5 her über 900h mit folgendem Zyklus beaufschlagt wurde:

23h Wasser bei 8°C
1h Wasser bei 20°C
Druck: 50 mbar mit kleinen Spitzen beim Wasserwechsel

Die Umgebungsatmosphäre, mit der der Drucksensor 1 außerhalb der Prozessumgebung beaufschlagt war ist wie folgt:

Temperatur: 25°C
Relative Feuchte: 98%

Unter diesen Bedingungen wurde der Ausgabewert A über 900h bestimmt, wobei die erste Kennlinie 201 die Berechnung des Ausgabewertes A unter Einbeziehung der Messkapazität $C_M$ und der Referenzkapazität $C_R$ und die zweite Kennlinie 202 eine Berechnung des Ausgabewertes nur auf Basis der Referenzkapazität $C_R$ zeigt. In Figur 2 ist deutlich zu erkennen, dass nach etwa 160h die in der Messkammer 6 einsetzende Kondensation bei der ersten Kennlinie 201 eine Tendenz zu höheren Messwerten hin zeigt, wohin gegen die zweite Kennlinie 202, die ausschließlich auf der Referenzkapazität $C_R$ beruht, keine Veränderung zeigt. Wie aus Figur 2 ersichtlich ist, steigen die Ausgabewerte gemäß der ersten Kennlinie 201 ab etwa 600h unter den vorgenannten Bedingungen soweit an, dass bei dem anliegenden Druck von 50 mbar teilweise Werte von bis zu 250 mbar und beim Wasserwechsel von über 600 mbar angezeigt werden.

Bezugszeichenliste

| | |
|---|---|
| 1 | Drucksensor |
| 3 | Grundkörper |
| 5 | Messmembran |
| 6 | Messkammer |
| 7 | Membranelektrode |
| 9 | Messelektrode |
| 11 | Referenzelektrode |
| 13 | Abstandshalter |
| 15 | erste hydrophobe Schicht |
| 16 | Zweite hydrophobe Schicht |
| 18 | Temperatursensor |
| 19 | Feuchtigkeitssensor |
| 21 | Sensorelektronik |
| 23 | Speicher |
| 25 | Vergleichseinheit |

| | |
|---|---|
| A | Ausgabewert |
| D | Druck |
| Z | Abweichung |
| $C_M$ | Messkapazität |
| $C_R$ | Referenzkapazität |
| $C_{R2}$ | Zweite Referenzkapazität |
| $F_Z$ | erste Funktion |
| $F_Q$ | zweite Funktion |
| $F_{CR}$ | dritte Funktion |
| $F_{CM}$ | vierte Funktion |

**Patentansprüche**

1. Verfahren zur Ermittlung eines Ausgabewertes (A), der einem Druck (P) oder einem zu dem Druck (P) proportionalen Wert entspricht, mit einem Relativdrucksensor mit wenigstens einer zwischen einem Grundkörper (3) und einer Messmembran (5) ausgebildeten Messkapazitäten ($C_M$) und wenigstens einer zwischen dem Grundkörper (3) und der Messmembran (5) ausgebildeten Referenzkapazität ($C_R$), wobei eine Ermittlung des Ausgabewertes (A) wenigstens folgende Schritte aufweist

- Bestimmen der Messkapazität ($C_M$)
- Bestimmen der Referenzkapazität ($C_R$)
- Vergleichen eines Werts einer ersten Funktion $F_Z(C_R)$ der Referenzkapazität ($C_R$) mit der Messkapazität ($C_M$) und
- Ausgeben von

$$A = F_Q (C_M, C_R) \quad \text{für } C_M = F_z (C_R)$$
$$A = F_{CR} (C_R) \quad \text{für } C_M > F_Z (C_R)$$
$$A = F_{CM} (C_M) \quad \text{für } C_M < F_Z (C_R)$$

als Ausgabewert.

2. Verfahren gemäß Anspruch 1,
bei dem der Ausgabewert (A) zusätzlich Temperatur- und / oder Feuchtigkeitskompensiert wird.

3. Verfahren gemäß einem der vorhergehenden Ansprüche, bei dem die erste Funktion eine von der Geräte-Genauigkeit abhängige Abweichung (Z) von insbesondere +/- 1% berücksichtigt.

4. Relativdrucksensor ((1) mit wenigstens einer zwischen einem Grundkörper (3) und einer Messmembran (5) ausgebildeten Messkapazität ($C_M$) und wenigstens einer zwischen dem Grundkörper (3) und der Messmembran (5) ausgebildeten Referenzkapazität ($C_R$), wobei der Drucksensor (1) eine Sensorelektronik (21) mit einem Speicher (23) und einer Vergleichseinheit (25) aufweist, wobei in dem Speicher (23) wenigstens

- eine erste Funktion $F_Z(C_R)$ der Messkapazität ($C_M$) in Abhängigkeit von der Referenzkapazität ($C_R$),
- eine zweite Funktion $F_Q(C_M, C_R)$ zur Bestimmung eines Ausgabewertes (A) in Abhängigkeit von der Messkapazität ($C_M$), und der Referenzkapazität ($C_R$),
- eine dritte Funktion $F_{CR}(C_R)$ zur Bestimmung des Ausgabewertes in Abhängigkeit von der Referenzkapazität ($C_R$) sowie
- eine vierte Funktion $F_{CM}(C_M)$ zur Bestimmung des Ausgabewertes abhängig von der Messkapazität ($C_M$), hinterlegt ist, der Vergleichseinheit (25) die Messkapazität ($C_M$) und ein Wert der ersten Funktion ($F_Z$) zugeführt ist und abhängig von dem Vergleich folgendes ausgegeben wird:

$$A = F_Q (C_M, C_R) \quad \text{für } C_M = F_z (C_R)$$
$$A = F_{CR} (C_R) \quad \text{für } C_M > F_Z (C_R)$$
$$A = F_{CM} (C_M) \quad \text{für } C_M < F_Z (C_R)$$

5. Relativdrucksensor (1) gemäß Anspruch 4,
der eine zweite Referenzkapazität ($C_R$) aufweist, wobei in dem Speicher wenigstens eine fünfte Funktion zur Bestimmung des Ausgabewertes (A) abhängig von der zweiten Referenzkapazität ($C_R$) hinterlegt ist.

6. Relativdrucksensor (1) gemäß Anspruch 4 oder 5,
der ferner einen Temperatursensor (18) und/oder Feuchtigkeitssensor (19) an oder in dem Drucksensor, vorzugsweise in einer zwischen dem Grundkörper (1) und der Messmembran (5) ausgebildeten Messkammer (6) aufweist.


**Geänderte Patentansprüche gemäss Regel 137(2) EPÜ.**

1. Verfahren zur Ermittlung eines Ausgabewertes (A), der einem Druck (P) oder einem zu dem Druck (P) proportionalen Wert entspricht, mit einem Relativdrucksensor mit wenigstens einer zwischen einem Grundkörper (3) und einer Messmembran (5) ausgebildeten Messkapazitäten ($C_M$) und wenigstens einer zwischen dem Grundkörper (3) und der Messmembran (5) ausgebildeten Referenzkapazität ($C_R$), wobei eine Ermittlung des Ausgabewertes (A) wenigstens folgende Schritte aufweist

- Bestimmen der Messkapazität ($C_M$)
- Bestimmen der Referenzkapazität ($C_R$), **gekennzeichnet durch** die folgenden Schritte
- Vergleichen eines Werts einer ersten Funktion $F_Z(C_R)$ der Referenzkapazität ($C_R$) mit der Messkapazität ($C_M$) und
- Ausgeben von

$$A = F_Q(C_M, \; C_R) \qquad \text{für } C_M = F_Z(C_R)$$

$$A = F_{CR}(C_R) \qquad \text{für } C_M > F_Z(C_R)$$

$$A = F_{CM}(C_M) \qquad \text{für } C_M < F_Z(C_R)$$

als Ausgabewert.

2. Verfahren gemäß Anspruch 1,
   bei dem der Ausgabewert (A) zusätzlich Temperatur- und / oder Feuchtigkeitskompensiert wird.

3. Verfahren gemäß einem der vorhergehenden Ansprüche, bei dem die erste Funktion eine von der Geräte-Genauigkeit abhängige Abweichung (Z) von insbesondere +/- 1% berücksichtigt.

4. Relativdrucksensor ((1) mit wenigstens einer zwischen einem Grundkörper (3) und einer Messmembran (5) ausgebildeten Messkapazität ($C_M$) und wenigstens einer zwischen dem Grundkörper (3) und der Messmembran (5) ausgebildeten Referenzkapazität ($C_R$),
   **dadurch gekennzeichnet, dass** der Drucksensor (1) eine Sensorelektronik (21) mit einem Speicher (23) und einer Vergleichseinheit (25) aufweist, wobei in dem Speicher (23) wenigstens

   - eine erste Funktion $F_Z(C_R)$ der Messkapazität ($C_M$) in Abhängigkeit von der Referenzkapazität ($C_R$),
   - eine zweite Funktion $F_Q(C_M, C_R)$ zur Bestimmung eines Ausgabewertes (A) in Abhängigkeit von der Messkapazität ($C_M$), und der Referenzkapazität ($C_R$),
   - eine dritte Funktion $F_{CR}(C_R)$ zur Bestimmung des Ausgabewertes in Abhängigkeit von der Referenzkapazität ($C_R$) sowie
   - eine vierte Funktion $F_{CM}(C_M)$ zur Bestimmung des Ausgabewertes abhängig von der Messkapazität ($C_M$),
   hinterlegt ist, der Vergleichseinheit (25) die Messkapazität ($C_M$) und ein Wert der ersten Funktion ($F_Z$) zugeführt ist und abhängig von dem Vergleich folgendes ausgegeben wird:

$$A = F_Q(C_M, \; C_R) \qquad \text{für } C_M = F_Z(C_R)$$

$$A = F_{CR}(C_R) \qquad \text{für } C_M > F_Z(C_R)$$

$$A = F_{CM}(C_M) \qquad \text{für } C_M < F_Z(C_R)$$

5. Relativdrucksensor (1) gemäß Anspruch 4,
   der eine zweite Referenzkapazität ($C_R$) aufweist, wobei in dem Speicher wenigstens eine fünfte Funktion zur Bestimmung des Ausgabewertes (A) abhängig von der zweiten Referenzkapazität ($C_R$) hinterlegt ist.

6. Relativdrucksensor (1) gemäß Anspruch 4 oder 5,

der ferner einen Temperatursensor (18) und/oder Feuchtigkeitssensor (19) an oder in dem Drucksensor, vorzugsweise in einer zwischen dem Grundkörper (1) und der Messmembran (5) ausgebildeten Messkammer (6) aufweist.

Fig. 1

## Fig. 2

**Europäisches Patentamt**

**European Patent Office**

**Office européen des brevets**

# EUROPÄISCHER RECHERCHENBERICHT

Nummer der Anmeldung

EP 15 19 6952

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 10 2013 222129 B3 (HAHN SCHICKARD GES FÜR ANGEWANDTE FORSCHUNG E V [DE]) 9. Oktober 2014 (2014-10-09) * das ganze Dokument * ----- | 1-6 | INV. G01L9/00 G01L9/12 |
| | | | RECHERCHIERTE SACHGEBIETE (IPC) |
| | | | G01L |

Der vorliegende Recherchenbericht wurde für alle Patentansprüche erstellt

| Recherchenort | Abschlußdatum der Recherche | Prüfer |
|---|---|---|
| Den Haag | 2. Mai 2016 | Kister, Clemens |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

................................................................

& : Mitglied der gleichen Patentfamilie, übereinstimmendes Dokument

EPO FORM 1503 03.82 (P04C03)

EP 3 173 760 A1

**ANHANG ZUM EUROPÄISCHEN RECHERCHENBERICHT
ÜBER DIE EUROPÄISCHE PATENTANMELDUNG NR.**

EP 15 19 6952

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

02-05-2016

| Im Recherchenbericht angeführtes Patentdokument | Datum der Veröffentlichung | Mitglied(er) der Patentfamilie | Datum der Veröffentlichung |
|---|---|---|---|
| DE 102013222129 B3 | 09-10-2014 | DE 102013222129 B3<br>DE 202014010496 U1<br>WO 2015063150 A1 | 09-10-2014<br>10-12-2015<br>07-05-2015 |

EPO FORM P0461

Für nähere Einzelheiten zu diesem Anhang : siehe Amtsblatt des Europäischen Patentamts, Nr.12/82

EP 3 173 760 A1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1061351 A1
- EP 2463635 A1